# EUROPEAN PATENT APPLICATION

(11) **EP 4 556 893 A1**
(43) Date of publication of application: **21.05.2025**
(21) Application number: 23839200.5
(22) Date of filing: 16.02.2023
(51) Int. Cl.: G01N 21/88, G06T 7/00, G06V 10/82

(54) **PACKAGED ITEM INSPECTION DEVICE AND PACKAGED ITEM INSPECTION METHOD**

(30) Priority: 15.07.2022 JP 2022113637
(71) Applicant: CKD CORPORATION, Komaki-shi, Aichi 485-8551 (JP)
(72) Inventor: TAGUCHI Yukihiro, Komaki-shi, Aichi 485-8551 (JP); IMAIZUMI Shiori, Komaki-shi, Aichi 485-8551 (JP); ODA Shozo, Komaki-shi, Aichi 485-8551 (JP)
(74) Representative: Winter, Brandl - Partnerschaft mbB
(86) International application number: PCT/JP2023/005400
(87) International publication number: WO 2024/014020

(57) **Abstract**

There is provided, for example, a packaged item inspection device that enables a break, a tear or the like of a packaging material to be detected with higher accuracy without using any special packaging material having an ultraviolet absorbing function. A packaged item 1 as an inspection object is obtained by shrink-wrapping or stretch-wrapping an object item to be packaged, with a packaging material. The object item to be packaged has an outer surface that is rougher than an outer surface of the packaging material. The packaged item inspection device performs imaging of ultraviolet light reflected from the packaged item 1 in the state that the packaged item 1 is irradiated with ultraviolet light, and determines whether the packaging material in the packaged item 1 is defective or non-defective, based on regularly reflected light image data with regard to the packaged item 1, which is obtained by this imaging. In the regularly reflected light image data, a damaged location is relatively dark, whereas a normal location is relatively bright. A relatively large difference in contrast is provided between the normal location and the damaged location. This configuration accordingly enables a break, a tear or the like of the packaging material to be detected with higher accuracy, without using any special packaging material having the ultraviolet absorbing function.

## Description

### Technical Field

The present disclosure relates to an inspection device for and an inspection method of performing an inspection for a packaged item, which is obtained by shrink-wrapping or stretch-wrapping an object item to be packaged, with a predetermined packaging material.

### Background

There are conventionally known packaged items, each being obtained by shrink-wrapping or stretch-wrapping each of a variety of object items to be packaged, such as a food item, a cosmetic item, a medicinal item or a daily supply, with a predetermined packaging material. Such packaged items are widely used in terms of protection of the object item to be packaged, improvement in convenience in handling of the object item to be packaged, and improvement in design ability. The packaged item may be, for example, a full-covered type obtained by covering the entirety of the object item to be packaged, with a packaging material or a partly-covered type obtained by covering part of the object item to be packaged, with a packaging material.

The occurrence of a damage such as a tear or a break in the packaged item is likely to cause various problems, for example, insufficient protection of the object item to be packaged and reduction of the convenience and the design ability. Accordingly, there is a need to perform an inspection for the presence or the absence of any tear, break or the like in the packaging material, for example, prior to shipping of the product (packaged item).

A known inspection device configured to perform an inspection for a tear, a break or the like in a label used for covering an object item to be packaged uses a label provided with an ultraviolet light absorbing function, irradiates the label with light including ultraviolet light as inspection light, and performs an inspection for the presence or the absence of any tear, break or the like in the label by utilizing an image (fluorescence image) based on fluorescence from the label (as described in, for example, Patent Literature 1). This inspection device is allowed to perform an inspection for the presence or the absence of any tear, break or the like in the label by utilizing the disappearance of the fluorescence in a damaged location of the label having a tear, a break or the like.

### Citation List

### Patent Literature

Patent Literature 1: Japanese Patent No. 2004-12294A

### Summary

### Technical Problem

In order to use the inspection device described above for the inspection of the packaged item, there is a need to provide the packaging material with an ultraviolet light absorbing function. Purposely providing the ultraviolet light absorbing function for the purpose of inspection is, however, likely to increase the manufacturing cost of the product (packaged item).

Furthermore, in a fluorescence image is likely to have a small difference in contrast between a normal location and a damaged location in the packaging material and is also likely to cause "blurring" at a boundary between the normal location and the damaged location. There is accordingly a difficulty in obtaining a sharp image for the inspection. This is likely to cause an insufficient accuracy of the inspection.

By taking into account the circumstances described above, an object of the present disclosure is to provide a packaged item inspection device and a packaged item inspection method that enable a break, a tear or the like of a packaging material to be detected with higher accuracy without using any special packaging material having an ultraviolet absorbing function.

### Solution to Problem

The following describes each of various aspects provided adequately to solve the problems described above. Functions and advantageous effects that are characteristic of each of the aspects are also described as appropriate.

Aspect 1. There is provided a packaged item inspection device configured to perform an inspection for a packaged item, which is obtained by shrink-wrapping or stretch-wrapping an object item to be packaged, with a packaging material made of a predetermined thermoplastic resin material, wherein the object item to be packaged has an outer surface that is rougher than an outer surface of the packaging material. The packaged item inspection device comprises: an irradiation unit configured to irradiate the packaged item with ultraviolet light; an imaging unit configured to perform imaging of the ultraviolet light reflected from the packaged item; and a determination unit configured to determine whether the packaging material in the packaged item is defective or non-defective, based on regularly reflected light image data with regard to the packaged item obtained by the imaging performed by the imaging unit.

In the configuration of the above aspect 1, the outer surface of the object item to be packaged is thought to be rougher than the outer surface of the packaging material. Accordingly, in the regularly reflected light image data obtained by imaging of the packaged item in the state that the packaged item is irradiated with ultraviolet light, a damaged location having a tear, a break or the like (a part where the outer surface of the object item to be packaged is exposed) is relatively dark, whereas a normal location is relatively bright. The configuration of the above aspect 1 determines whether the packaging material in the packaged item is defective or non-defective, based on such differences occurring in the regularly reflected light image data. This configuration thus enables an inspection for the presence or the absence of any break, tear or the like in the packaging material to be performed without using any special material having an ultraviolet absorbing function. This accordingly suppresses an increase in manufacturing cost of the product (the packaged item).

Furthermore, the configuration of the above aspect 1 utilizes the regularly reflected light image data, so as to provide a relatively large difference in contrast between the normal location and the damaged location in the packaging material and more effectively prevent the occurrence of "blurring" at a boundary between the normal location and the damaged location. This configuration enables a sharp image for the inspection to be obtained more certainly and thereby ensures a detection of any break, tear or the like in the packaging material with the higher accuracy.

Examples of the thermoplastic resin material used for making the packaging material include, polypropylene (PP), polyethylene (PE), polyolefin (PO) polyvinyl chloride (PVC), polyvinylidene chloride (PVDC), polystyrene (PS), polyethylene terephthalate (PET), polymethylpentene (PM) and linear low-density polyethylene (LLDPE).

Aspect 2. In the packaged item inspection device described in the above aspect 1, at least one of the irradiation unit and the imaging unit may be configured to be movable relative to the packaged item, and the imaging unit may perform imaging of the packaged item a multiple number of times in a state that at least one of the irradiation unit and the imaging unit is moved relative to the packaged item, so as to obtain a plurality of luminance image data that include information with regard to luminance at a plurality of locations in the packaged item. The packaged item inspection device may further comprise a regularly reflected light image data generation unit configured to perform setting of a highest luminance value, among a plurality of luminance values with regard to one identical location in the packaged item, which are respectively shown by the plurality of luminance image data, to luminance of the one identical location, with respect to each location of the packaged item, so as to generate the regularly reflected light image data with regard to the packaged item.

The configuration of the above aspect 2 enables the more accurate regularly reflected light image data to be obtained relatively easily. This further improves the accuracy of the inspection for the packaging material.

In the configuration of the above aspect 2, the irradiation unit and the imaging unit are provided corresponding to a transfer path of the packaged item. In the configuration that the irradiation unit and the imaging unit are movable relative to the packaged item, imaging of the packaged item during transfer of the packaged item ensures the higher efficiency of the inspection. This more effectively suppresses an increase in cost relating to the manufacture.

Aspect 3. In the packaged item inspection device described in the above aspect 1, the irradiation unit may be shadowless illumination having a plurality of ultraviolet light sources.

The configuration of the above aspect 3 enables the regularly reflected light image data with regard to the packaged item to be obtained by a relatively small number of imaging operations (for example, by only one imaging operation). This configuration reduces the processing load for obtaining the regularly reflected light image data. This configuration also increases the speed of the inspection and thereby improves the productivity.

Aspect 4. In the packaged item inspection device described in the above aspect 1, the determination unit may be configured to process the regularly reflected light image data by a binarization process and thereby obtain binarized image data, and when an area of a connected region of a dark portion in the binarized image data is greater than a reference value set in advance, the determination unit may be configured to determine that the packaging material is defective.

The configuration of the above aspect 4 utilizes the area of the connected region of the dark portion to perform the good/ poor quality judgment of the packaging material. This configuration more certainly prevents a shadow caused by fine "crinkles" present in the packaging material from being falsely detected as a defective part. As a result, this furthermore improves the accuracy of the inspection.

Aspect 5. In the packaged packaged item inspection device described in the above aspect 1, the determination unit may comprise: an identification unit generated by learning of a neural network using only the regularly reflected light image data with regard to a non-defective packaged item, as learning data, wherein the neural network comprises an encoding unit configured to extract a feature quantity from input image data; and a decoding unit configured to reconfigure image data from the feature quantity; a reconfiguration image data obtaining unit configured to obtain reconfiguration image data that is image data reconfigured by inputting the regularly reflected light image data obtained by the imaging performed by the imaging unit, as original image data into the identification unit; and a comparison unit configured to determine whether the packaging material is defective or non-defective, based on a result of comparison between the original image data and the reconfiguration image data.

The "regularly reflected light image data with regard to the non-defective packaged item" used as the "learning data" described above may be, for example, regularly reflected light image data with regard to non-defective packaged items which have been accumulated by previous inspections, regularly reflected light image data with regard to non-defective packaged items which are visually selected by an operator, or virtual non-defective image data which are generated by using the foregoing image data or the like.

The "neural network" described above includes, for example, a convolution neural network having a plurality of convolution layers. The "learning" described above includes, for example, deep learning. The "identification unit (generation model)" described above includes, for example, an autoencoder and a convolution autoencoder.

Additionally, the "identification unit" is generated by learning using only the regularly reflected light image data with regard to the non-defective packaged item. Accordingly, reconfiguration image data generated by inputting original image data with regard to a defective packaged item into the identification unit is substantially consistent with original image data with exclusion of a noise part (a defective part). In the case where a packaged item has a defective part, virtual image data of regularly reflected light with regard to the packaged item on the assumption of the absence of any defective part is accordingly generated as the reconfiguration image data.

The configuration of the above aspect 5 compares the original image data with the reconfiguration image data, which is reconfigured by inputting the original image data into the identification unit, and determines whether the packaging material is defective or non-defective, based on the results of the comparison. The two image data to be compared with each other pertain to one identical packaged item. The two image data to be compared with each other accordingly have substantially identical shapes and appearances of the packaged item. This configuration does not need to set relatively loose determination conditions with the purpose of preventing false detection due to the differences in shape and appearance, but allows the stricter determination conditions to be set. Furthermore, this configuration enables identical conditions for obtaining image data (for example, the position and the angle of the packaged item placed relative to a camera, the light/ dark state, and the angle of view of the camera) to be set for the two image data to be compared with each other. As a result, this configuration achieves the extremely high accuracy of the inspection.

Aspect 6. There is provided a packaged item inspection method of performing an inspection for a packaged item, which is obtained by shrink-wrapping or stretch-wrapping an object item to be packaged, with a packaging material made of a predetermined thermoplastic resin material, wherein the object item to be packaged has an outer surface that is rougher than an outer surface of the packaging material. The packaged item inspection method comprises: an irradiation process of irradiating the packaged item with ultraviolet light; an imaging process of performing imaging of the ultraviolet light reflected from the packaged item; and a determination process of determining whether the packaging material in the packaged item is defective or non-defective, based on regularly reflected light image data with regard to the packaged item obtained by the imaging performed in the imaging process.

The configuration of the above aspect 6 has similar functions and advantageous effects to those of the aspect 1 described above.

The technical features described above in the respective aspects may be combined appropriately. For example, the technical features with regard to the above aspect 2 or the above aspect 3 may be combined with the technical features with regard to the above aspect 4 or the above aspect 5. In another example, each of the technical features with regard to the above aspects 2 to 5 may be applied appropriately to the above aspect 6.

### Brief Description of Drawings

Fig. 1 is a schematic sectional view illustrating a packaged item;
Fig. 2 is a schematic perspective view illustrating a packaged item inspection device;
Fig. 3 is a schematic front view illustrating the packaged item inspection device;
Fig. 4 is a schematic view illustrating a difference in reflection state of ultraviolet light between the presence and the absence of any damaged location in a packaging material;
Fig. 5 is a block diagram illustrating the functional configuration of the packaged item inspection device;
Fig. 6 is a schematic diagram illustrating the structure of a neural network;
Fig. 7 is a flowchart showing the flow of a learning process of the neural network;
Fig. 8 is a flowchart showing the flow of an inspection process;
Fig. 9 is a partly broken schematic front view illustrating a packaged item inspection device provided with a movable illumination device according to another embodiment;
Fig. 10 is a partly broken schematic front view illustrating a packaged item inspection device provided with an illumination device configured by shadowless illumination according to another embodiment; and
Fig. 11 is a schematic view illustrating binarized image data according to another embodiment.

### Description of Embodiments

The following describes one embodiment with reference to drawings. A packaged item 1 as an inspection object is described first.

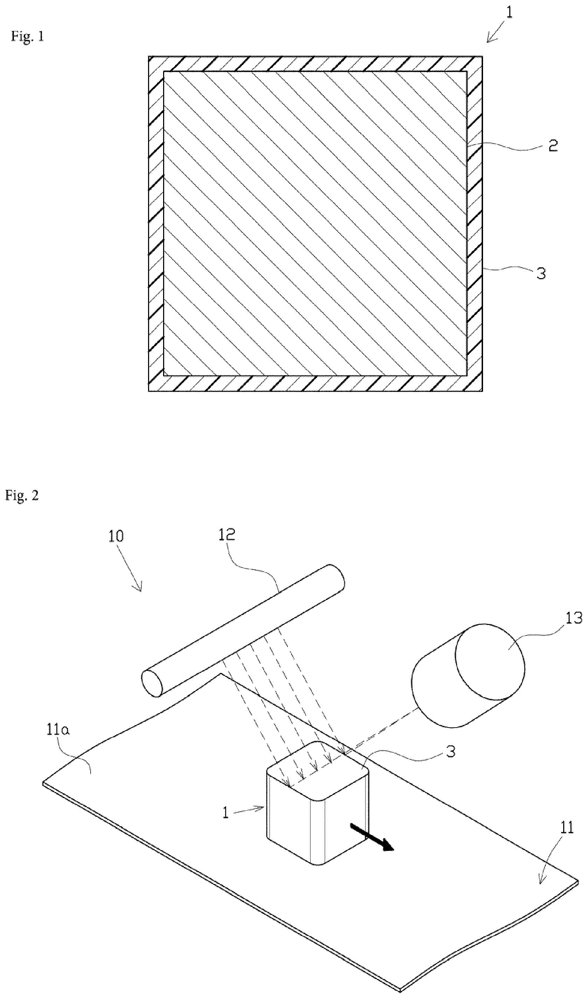

As shown in Figs. 1 and 2, the packaged item 1 is manufactured by shrink-wrapping or stretch-wrapping an object item to be packaged 2 with a packaging material 3. As a matter of convenience, the packaging material 3 is expressed to be excessively thicker than the actual state in Fig. 1 and other drawings.

The object item to be packaged 2 may be, for example, a food item, a cosmetic item, a medicinal item, a daily supply, an electric appliance, a book or the like. The object item to be packaged 2 is, however, naturally not limited to these examples. The object item to be packaged 2 is provided with a box or a case made of, for example, a paper material or a resin material to place a content therein. This box or case may form an outer surface of the object item to be packaged 2. According to the embodiment, the entire outer surface of the object item to be packaged 2 is covered with the packaging material 3. The packaged item 1 may be obtained by partly covering part of the outer surface of the object item to be packaged 2 with the packaging material 3.

Additionally, the outer surface of the object item to be packaged 2 is not a mirror plane but has a higher roughness than the roughness of an outer surface of the packaging material 3. The roughness of each of the outer surfaces of the object item to be packaged 2 and of the packaging material 3 may be measured by, for example, utilizing a calculated average roughness Ra.

The packaging material 3 is a sheet (film) made of a predetermined thermoplastic resin material and has at least the outer surface formed to be a smooth surface. Available examples of the thermoplastic resin material used for the packaging material 3 include PPE, PE, PO, PVC, PVDC, PS, PET, PMP and LLDPE.

The following describes the schematic configuration of a packaged item inspection device 10 configured to perform an inspection for the packaged item 1 described above and more specifically the packaging material 3 thereof.

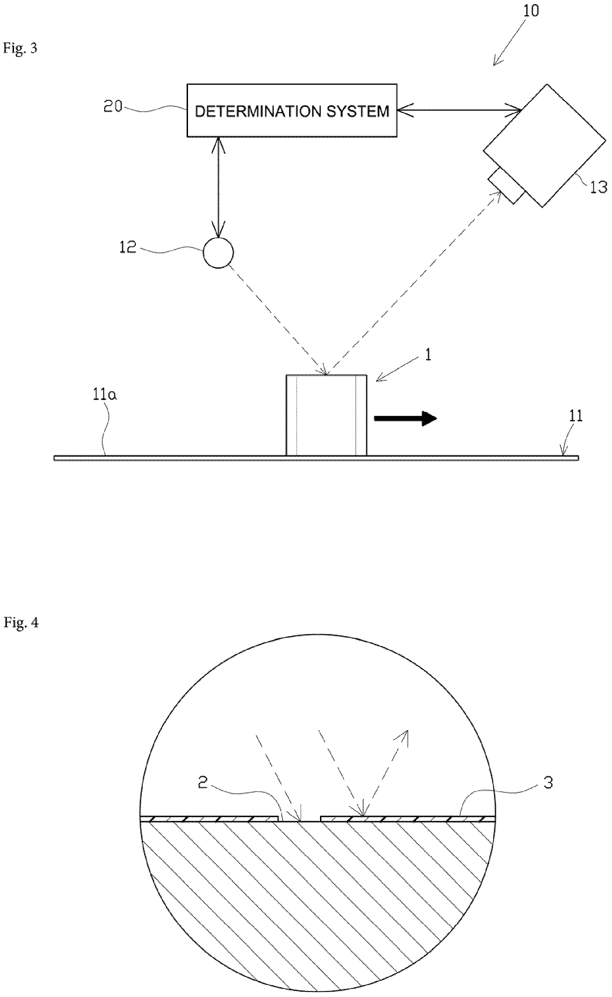

As shown in Figs. 2 and 3, the packaged item inspection device 10 includes a transfer device 11, an illumination device 12, a line sensor camera 13 and a determination system 20. According to the embodiment, the illumination device 12 configures the "illumination unit", and the line sensor camera 13 configures the "imaging unit".

The transfer device 11 is a device configured to transfer the packaged item 1 to a predetermined post-process device (for example, a boxing device) or the like). The transfer device 11 includes, for example, a transfer belt 11a which the packaged item 1 is placed on and is configured to continuously transfer the packaged item 1 at a fixed speed in a horizontal direction by moving the transfer belt 11a. The transfer of the packaged item 1 by the transfer device 11 accordingly causes both the illumination device 12 and the line sensor camera 13 to be moved relative to the packaged item 1.

The transfer device 11 is provided with a non-illustrated defective discharge mechanism. In response to input of a predetermined defective signal from the determination system 20, the packaged item 1 determined as a defective is discharged out of the system (out of a transfer path of the packaged item 1) by the defective discharge mechanism. This configuration prevents the packaged item 1 as the defective from being transferred to the post-process device described above.

The illumination device 12 and the line sensor camera 13 are respectively located above the transfer device 11 and are placed corresponding to the transfer path of the packaged item 1.

The illumination device 12 is configured to irradiate a predetermined area on an upper surface of the transfer device 11 (the transfer belt 11a), i.e., on a plane which the packaged item 1 is placed on, with ultraviolet light that is emitted from obliquely above the predetermined area. This configuration causes the packaged item 1 transferred to the predetermined area to be irradiated with the ultraviolet light that is emitted from obliquely above the predetermined area by the illumination device 12. The emitted ultraviolet light herein has a spread in a width direction of the transfer device 11 (in a direction perpendicular to a transfer direction of the packaged item 1). According to the embodiment, the process of irradiating the packaged item 1 with ultraviolet light by the illumination device 12 corresponds to the "irradiation process".

The line sensor camera 13 is placed at such a position that the predetermined area in the transfer device 11 is placed between the illumination device 12 and the line sensor camera 13 in planar view. The line sensor camera 13 has a line sensor including a plurality of detection elements, which are arranged in a line and which are configured to detect the ultraviolet light. The line sensor camera 13 is configured to allow for imaging (exposure) of the ultraviolet light that is reflected from the packaged item 1. According to the embodiment, image data obtained by the line sensor camera 13 are luminance image data having luminance values varying according to the detection output of the line sensor.

The line sensor camera 13 is also configured to perform imaging of the ultraviolet light reflected from the packaged item 1 a multiple number of times in the state that the packaged item 1 is transferred (i.e., in the state that both the illumination device 12 and the line sensor camera 13 are moved relative to the packaged item 1). This configuration accordingly obtains a plurality of luminance image data including information with regard to luminance values at a plurality of locations in the packaged item 1. According to the embodiment, the process of imaging the ultraviolet light reflected from the packaged item 1 by the line sensor camera 13 corresponds to the "imaging process".

The ultraviolet light which a normal location in the packaging material 3 is irradiated with, is regularly reflected by the packaging material 3, so that the regularly reflected ultraviolet light enters the line sensor camera 13. The ultraviolet light which a damaged location (a location having a break, a tear or the like) in the packaging material 3 is irradiated with, is, on the other hand, not regularly reflected by the packaging material 3, so that no regularly reflected ultraviolet light enters the line sensor camera 13 (respectively shown in Fig. 4). Accordingly, in the obtained luminance image data, a part (pixel) corresponding to the normal location has a light luminance value, while a part corresponding to the damaged location has a low luminance value.

Every time the packaged item 1 is transferred by a predetermined amount, the luminance image data obtained by the line sensor camera 13 is converted into a digital signal (image signal) inside of the line sensor camera 13 and is output in the form of the digital signal to the determination system 20 (to a regularly reflected light image data generator 24 described later).

According to the embodiment, the imaging timing of the line sensor camera 13 is set, such that a present target imaging area of the packaged item 1 that is currently imaged by the line sensor camera 13 partly overlaps a previous target imaging area of the packaged item 1 that is previously imaged by the line sensor camera 13. Accordingly, one pixel at predetermined coordinates in a plurality of continuously obtained luminance image data is configured to at least partly overlap a predetermined location in the packaged item 1 (a one-pixel area in a region occupied by the packaged item 1 in regularly reflected light image data described later) and to gradually shift downstream little by little in the transfer direction of the packaged item 1. According to the embodiment, each of the plurality of continuously obtained luminance image data accordingly has a pixel corresponding to (overlapping) one certain pixel in the regularly reflected light image data. The luminance of the one certain pixel in the regularly reflected light image data is set to a highest luminance value among respective luminance values shown by a plurality of pixels in the plurality of luminance image data, which respectively correspond to the one certain pixel, as described later.

The determination system 20 is configured by a computer including, for example, a CPU (Central Processing Unit) that executes predetermined arithmetic operations, a ROM (Read Only Memory) that stores a variety of programs, fixed value data and the like, a RAM (Random Access Memory) that temporarily stores a variety of data in relation to execution of various arithmetic operations, and peripheral circuits thereof; an input/ output device; a display device; and the like.

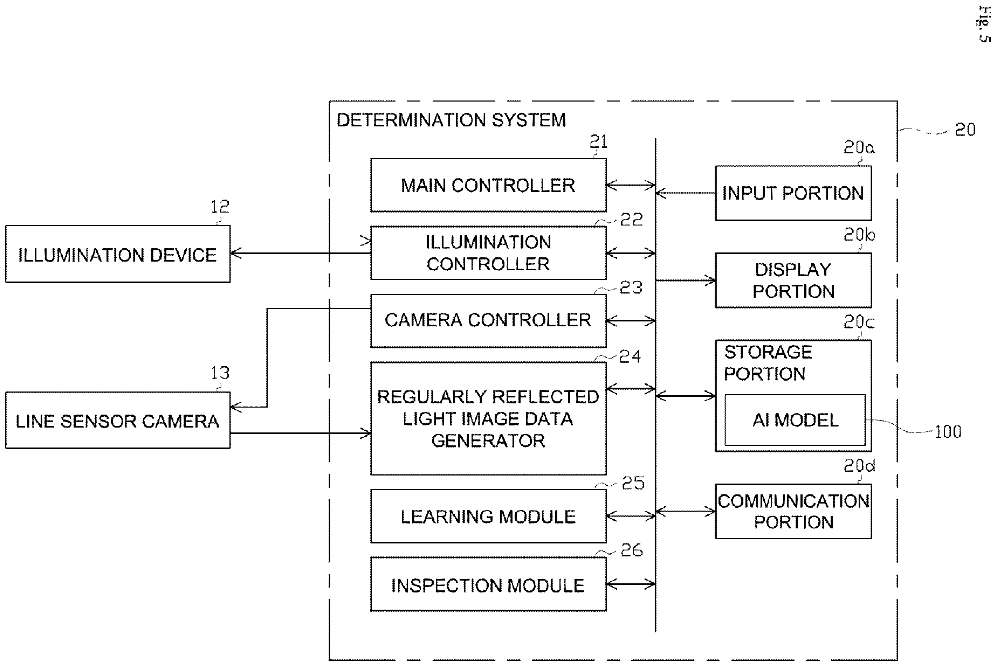

When the CPU operates according to the variety of programs, as shown in Fig. 5, the determination system 20 serves as various function modules including a main controller 21, an illumination controller 22, a camera controller 23, a regularly reflected light image data generator 24, a learning module 25, and an inspection module 26 described later. According to the embodiment, the regularly reflected light image data generator 24 configures the "regularly reflected light image data generation unit".

The respective function modules described above are, however, implemented by cooperation of the various hardware components, such as the CPU, the ROM and the RAM described above. There is no need to clearly distinguish the functions implemented by the hardware configuration and the functions implemented by the software configuration from each other. Part or the entirety of these functions may be implemented by a hardware circuit, such as an IC.

The determination system 20 is further provided with, for example, an input portion 20a that is configured by a keyboard and a mouse, a touch panel or the like; a display portion 20b that is configured by a liquid crystal display or the like and that is provided with a display screen to display various pieces of information; a storage portion 20c that is configured to store a variety of data and programs, the results of arithmetic operations, the results of inspection, and the like; and a communication portion 20d that is configured to send and receive a variety of data from and to the outside.

The following describes the above respective function modules configuring the determination system 20 more in detail.

The main controller 21 is a function module configured to control the entire determination system 20 and to send and receive various signals to and from other function modules including the illumination controller 22 and the camera controller 23.

The illumination controller 22 is a function module configured to control the illumination device 12, in response to a command signal from the main controller 21.

The camera controller 23 is a function module configured to control the line sensor camera 13 and more specifically to control, for example, an imaging timing by the line sensor camera 13, in response to a command signal from the main controller 21. The camera controller 23 controls an imaging timing by the line sensor camera 13, such that a present target imaging area of the packaged item 1 by the line sensor camera 13 partly overlaps a previous target imaging area of the packaged item 1 by the line sensor camera 13.

The regularly reflected light image data generator 24 is configured to generate regularly reflected light image data with regard to one packaged item 1 by using a plurality of luminance image data in relation to the packaged item 1 obtained from the line sensor camera 13.

More specifically, the regularly reflected light image data generator 24 first obtains a highest luminance value among a plurality of luminance values with regard to one identical location (one certain pixel in eventually obtained regularly reflected light image data), which are respectively shown by a plurality of luminance image data. For example, when each of three luminance image data respectively has one pixel corresponding to the one certain pixel, the regularly reflected light image data generator 24 obtains a highest luminance value among three luminance values respectively shown by these three pixels. The one identical location herein includes one identical location in the packaged item 1.

The regularly reflected light image data generator 24 subsequently performs a process of setting the obtained highest luminance value to the luminance of the one identical location described above (the one certain pixel in the eventually obtained regularly reflected light image data), with respect to each of the pixels in the eventually obtained regularly reflected light image data. This process is accordingly repeated with respect to each location of the packaged item 1 (with respect to each of the pixels included in a region occupied by the packaged item 1 in the eventually obtained regularly reflected light image data). The regularly reflected light image data generator 24 accordingly sets the luminances of all the pixels in the regularly reflected light image data as described above, so as to generate regularly reflected light image data with regard to the packaged item 1 (including information with regard to the packaged item 1). According to the embodiment, the generated regularly reflected light image data is image data in a rectangular shape including the entire area of the upper surface of the packaged item 1.

The configuration of this embodiment utilizes all the pixels of the luminance image data which include other areas as well as the region occupied by the packaged item 1, to generate the regularly reflected light image data with regard to the packaged item 1. A modified configuration may extract only the region occupied by the packaged item 1 from the luminance image data and may utilize only the pixels included in this region to generate the regularly reflected light image data with regard to the packaged item 1.

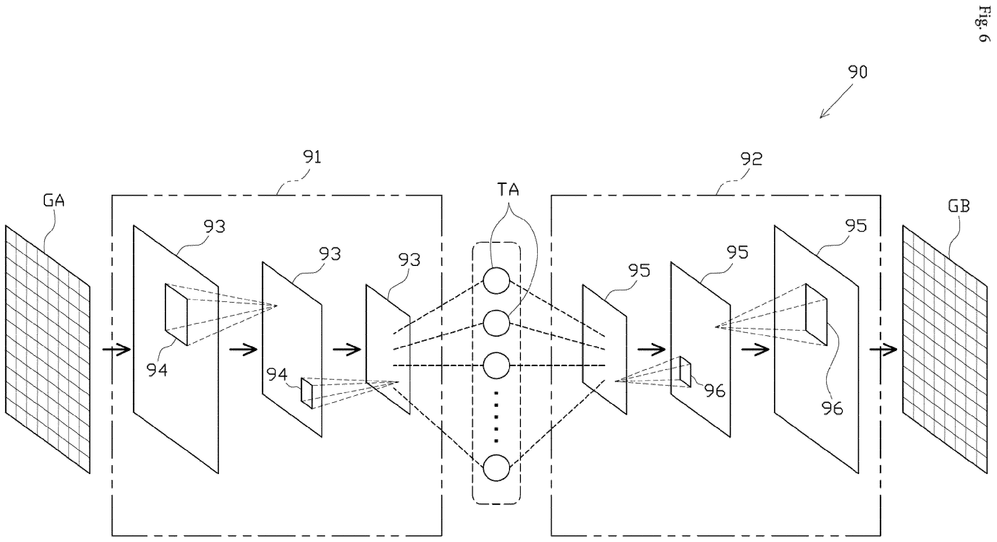

The learning module 25 is a function module configured to perform learning of a deep neural network 90 (hereinafter simply referred to as the "neural network 90": as shown in Fig. 6) by using learning data and to construct an AI (Artificial Intelligence) model 100 serving as the "identification unit".

The AI model 100 according to the embodiment is a generation model constructed by deep learning of the neural network 90 using only image data with regard to the non-defective packaged item 1 as learning data as described later and has a so-called autoencoder structure.

The structure of the neural network 90 is described with reference to Fig. 6. Fig. 6 is a schematic diagram conceptually illustrating the structure of the neural network 90. The neural network 90 has the configuration of a convolutional autoencoder (CAE) including an encoder portion 91 serving as an "encoding unit" configured to extract a feature quantity (latent variable) TA from input image data GA and a decoder portion 92 serving as a "decoding unit" configured to reconstruct image data GB from the feature quantity TA.

The configuration of the convolutional autoencoder is publicly known, so that the detailed description thereof is omitted. The encoder portion 91 has a plurality of convolution layers 93. Each of the convolution layers 93 is configured to output the results of convolution operations of input data using a plurality of filters (kernels) 94, as input data for a subsequent layer. Similarly, the decoder portion 92 has a plurality of deconvolution layers 95. Each of the deconvolution layers 95 is configured to output the results of deconvolution operations of input data using a plurality of filters (kernels) 96, as input data of a subsequent layer. The learning process described later updates weights (parameters) of the respective filters 94 and 96.

The inspection module 26 is a function module configured to perform good/ poor quality judgment for the packaging material 3 in the packaged item 1 that is transferred by the transfer device 11. According to the embodiment, for example, the inspection module 26 performs an inspection to determine whether the packaging material 3 has any damage, such as a break, a tear or the like. In the case where the packaging material 3 has a printed area, the inspection module 26 may perform good/ poor quality judgment for the printed area. According to the embodiment, the inspection module 26 configures the "determination unit".

The display portion 20b is placed, for example, in the vicinity of the transfer device 11 and is configured to display various pieces of information stored in the storage portion 20c. The display portion 20b is thus allowed to display, for example, various image data, such as luminance image data, information used for the inspection, and the results of the good/ poor quality judgment for the packaging material 3.

The storage portion 20c is configured by, for example, an HDD (Hard Disk Drive), an SSD (Solid State Drive) or the like and has a predetermined storage area to store, for example, the AI model 100 (the neural network 90 and learning information obtained by learning thereof). The storage portion 20c also has a function of storing various image data, information used for the inspection (for example, a variety of threshold values and reference values), and the results of the good/ poor quality judgment for the packaging material 3 performed by the inspection module 26.

The communication portion 20d is provided with, for example, a wireless communication interface in conformity with communication standards, such as a wired LAN (Local Area Network) and a wireless LAN and is configured to send and receive various data to and from the outside. For example, a defective signal based on the results of the good/ poor quality judgment performed by the inspection module 26 is output via the communication portion 20d to the outside (for example, the defective discharge mechanism).

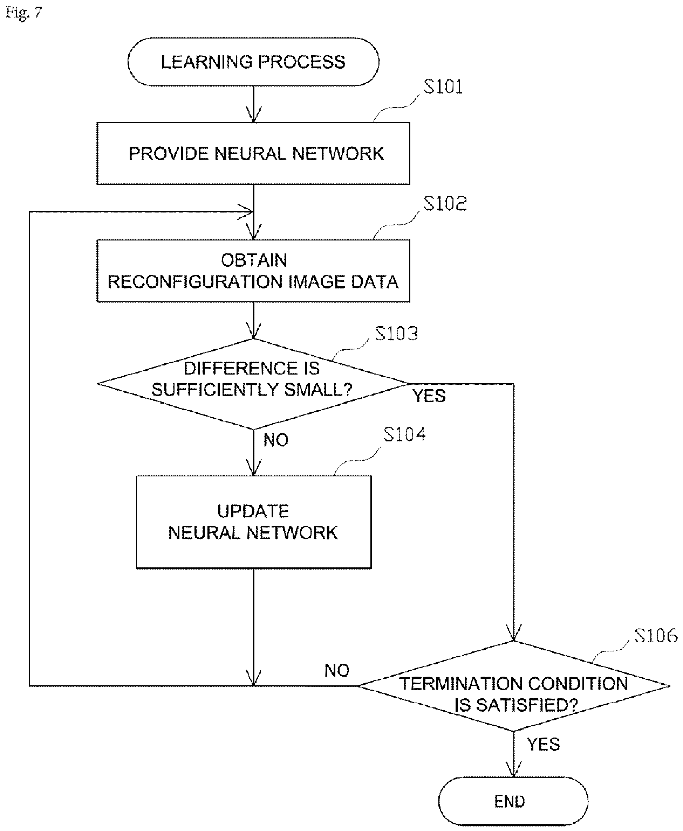

The following describes a learning process of the neural network 90 performed by the determination system 20 with reference to the flowchart of Fig. 7.

When the learning process is started by execution of a predetermined learning program, the main controller 21 first provides a neural network 90 that has not yet been learnt, at step S101. For example, the main controller 21 reads out a neural network 90 that is stored in advance in a predetermined storage device or the like. In another example, the main controller 21 constructs a neural network 90, based on network configuration information (for example, the number of layers of the neural network and the number of nodes in each layer) that is stored in the storage device or the like.

At step S102, the learning process subsequently obtains reconfiguration image data. More specifically, the learning process gives learning data provided in advance as input data to an input layer of the neural network 90 and then obtains reconfiguration image data output from an output layer of the neural network 90. The learning data herein may be, for example, regularly reflected light image data with regard to non-defective packaged items 1 which have been accumulated by previous inspections, regularly reflected light image data with regard to non-defective packaged items 1 which are visually selected by an operator, or virtual non-defective image data which are generated by using the foregoing image data or the like.

At subsequent step S103, the learning process compares the learning data with the reconfiguration image data output from the neural network 90 at step S102 and determines whether a difference therebetween is sufficiently small (whether the difference is equal to or less than a predetermined reference value).

When the difference is sufficiently small, the learning process subsequently determines whether a termination condition of the learning process is satisfied at step S105. It is determined that the termination condition is satisfied, for example, in the case where an affirmative answer is continually given a predetermined number of times at step S103 without proceeding to the processing of step S104 described later or in the case where the learning operation using the entirety of the provided learning data is repeated a predetermined number of times. When the termination condition is satisfied, the learning process stores the neural network 90 and the learning information thereof (updated parameters and the like described later), as the AI model 100, into the storage portion 20c and is then terminated.

When the termination condition is not satisfied at step S105, on the other hand, the learning process returns to step S102 to perform learning of the neural network 90 again.

When the difference is not sufficiently small at step S103, the learning process performs a network updating process (learning of the neural network 90) at step S104 and then goes back to step S102 to repeat the series of processing described above.

The network updating process at step S 104 uses a known learning algorithm, for example, an error backpropagation method, and updates the weights (parameters) of the respective filters 94 and 96 described above in the neural network 90 to more appropriate values, such as to minimize a loss function that represents a difference between the learning data and the reconfiguration image data. For example, BCE (Binary Cross-entropy) may be used as the loss function.

Repeating the processing of steps S102 to S104 a multiple number of times minimizes the difference between the learning data and the reconfiguration image data in the neural network 90 and enables the more accurate reconfiguration image data to be output from the neural network 90.

In the case of input of regularly reflected light image data with regard to a non-defective packaged item 1, the eventually obtained AI model 100 generates reconfiguration image data that is substantially identical with the input regularly reflected light image data. In the case of input of regularly reflected light image data with regard to a defective packaged item 1, on the other hand, the AI model 100 generates reconfiguration image data that is substantially identical with the input regularly reflected light image data excluding a noise portion (a portion corresponding to a damaged location in the packaging material 3). In other words, in the case of a defective packaging material 3 of the packaged item 1, virtual image data with regard to the packaged item 1 on the assumption that the packaging material 3 has no defective part (no damaged location), is generated as the reconfiguration image data with regard to the packaged item 1.

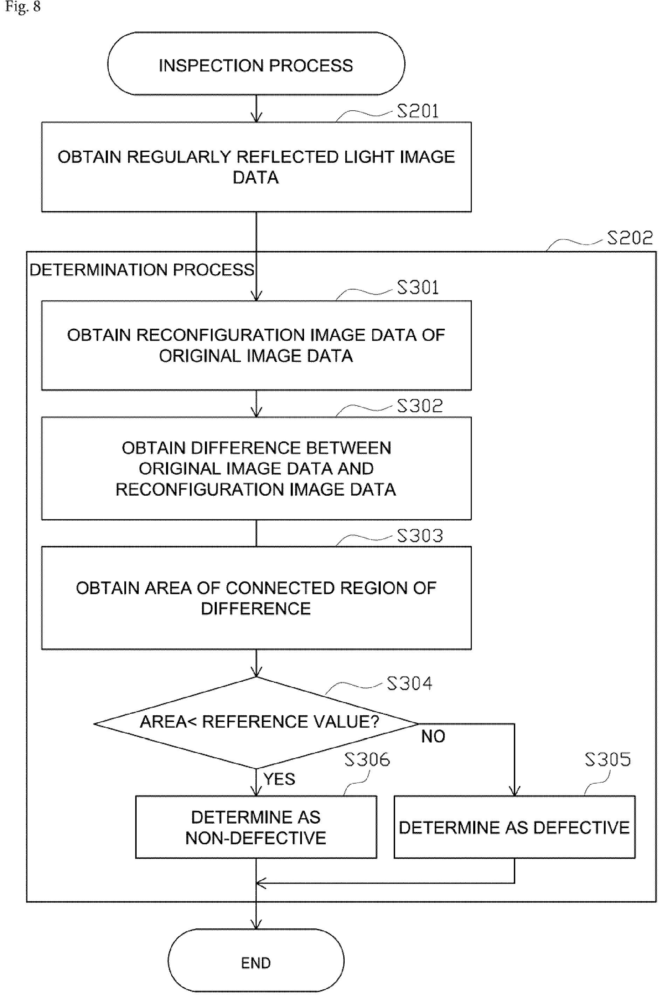

The following describes a process of good/ poor quality judgment (inspection process) of the packaged item 1 (more specifically, the packaging material 3) performed by the determination system 20, with reference to the flowchart of Fig. 8. This inspection process is performed at an ordinary inspection process execution timing that is set in advance.

At step S201, the inspection process first causes the line sensor camera 13 to repeatedly perform imaging of ultraviolet light reflected from the packaged item 1 in the state that the packaged item 1 is irradiated with the ultraviolet light emitted from the illumination device 12, while the packaged item 1 is transferred by the transfer device 11. The inspection process accordingly obtains a plurality of luminance image data with regard to the packaged item 1. The regularly reflected light image data generator 24 then obtains regularly reflected light image data with regard to the packaged item 1, based on these luminance image data.

The inspection process subsequently performs a determination process at step S202 to determine whether the packaging material 3 is defective or non-defective, based on the obtained regularly reflected light image data. In the determination process, at step S301, the inspection module 26 first obtains reconfiguration image data by inputting the regularly reflected light image data (original image data) obtained at step S201 into the AI model 100. According to the embodiment, the inspection module 26 configures the "reconfiguration image data obtaining unit".

At subsequent step S302, the inspection module 26 compares the regularly reflected light image data as the original image data with the configuration image data and specifies a difference between these two image data. For example, the inspection module 26 compares pixels of identical coordinates in these two image data with each other and specifies pixels having differences in luminance equal to or greater than a predetermined value, as this difference. According to the embodiment, the inspection module 26 of comparing the original image data with the reconfiguration image data configures the "comparison unit".

At step S303, the inspection module 26 subsequently calculates the area (the number of pixels) of a connected region of this difference (i.e., a block of pixels having the differences in luminance equal to or greater than the predetermined value).

At step S304, the inspection module 26 then determines the presence or the absence of any damaged location (defective part) in the packaging material 3. More specifically, the inspection module 26 determines whether the area calculated at step S303 is greater than a predetermined reference value. When the calculated area is greater than the reference value, the inspection module 26 determines that the packaging material 3 is "defective" and thereby determines that the packaged item 1 is "defective" at step S305 and then terminates the inspection process. In the case of determination as "defective", a defective signal is output to the defective discharge mechanism described above.

When the calculated area is equal to or less than the reference value, on the other hand, the inspection module 26 determines that the packaging material 3 is "non-defective" and thereby determines that the packaged item 1 is "non-defective" at step S306 and then terminates the inspection process.

As described above, according to the embodiment, the outer surface of the object item to be packaged 2 is thought to be rougher than the outer surface of the packaging material 3. Accordingly, in the regularly reflected light image data, a damaged location having a tear, a break or the like (a part where the outer surface of the object item to be packaged 2 is exposed) is relatively dark, whereas a normal location is relatively bright. The configuration of the embodiment determines whether the packaging material 3 in the packaged item 1 is defective or non-defective, based on such differences occurring in the regularly reflected light image data. This configuration thus enables an inspection for the presence or the absence of any break, tear or the like in the packaging material 3 to be performed without using any special material having the ultraviolet absorbing function for the packaging material 3. This accordingly suppresses an increase in cost relating to manufacture of the product (the packaged item 1).

Furthermore, the configuration of the embodiment utilizes the regularly reflected light image data, so as to provide a relatively large difference in contrast between the normal location and the damaged location in the packaging material 3 and more effectively prevent the occurrence of "blurring" at a boundary between the normal location and the damaged location. This configuration enables a sharp image for the inspection (the regularly reflected light image data according to the embodiment) to be obtained more certainly and thereby ensures a detection of any break, tear or the like in the packaging material 3 with the higher accuracy.

Moreover, the configuration of the embodiment generates the regularly reflected light image data by performing the process of setting the highest luminance value among a plurality of luminance values with regard to one identical location (one certain pixel in eventually obtained regularly reflected light image data), which are respectively shown by a plurality of luminance image data, to the luminance of the one identical location (the one certain pixel), with respect to each of the pixels in the eventually obtained regularly reflected light image data. This configuration thus enables the more accurate regularly reflected light image data to be obtained relatively easily. This further improves the accuracy of the inspection for the packaging material 3.

Additionally, the configuration of the embodiment compares the regularly reflected light image data (the original image data) with the reconfiguration image data that is reconfigured by inputting the original image data into the AI model 100 and determines whether the packaging material 3 is defective or non-defective, based on the results of the comparison. The two image data to be compared with each other pertain to the one identical packaged item 1. The two image data to be compared with each other accordingly have substantially identical shapes and appearances of the packaged item 1. This configuration does not need to set relatively loose determination conditions with the purpose of preventing false detection due to the differences in shape and appearance, but allows the stricter determination conditions to be set. Furthermore, this configuration enables identical conditions for obtaining image data (for example, the position and the angle of the packaged item 1 placed relative to the line sensor camera 13, the light/ dark state, and the angle of view of the camera) to be set for the two image data to be compared with each other. As a result, this configuration achieves the extremely high accuracy of the inspection.

Furthermore, the configuration of the embodiment performs the good/ poor quality judgment of the packaging material 3 as described above and thereby more certainly prevents a shadow caused by fine "crinkles" present even in a non-defective packaging material 3 from being falsely detected as a defective part. As a result, this furthermore improves the accuracy of the inspection.

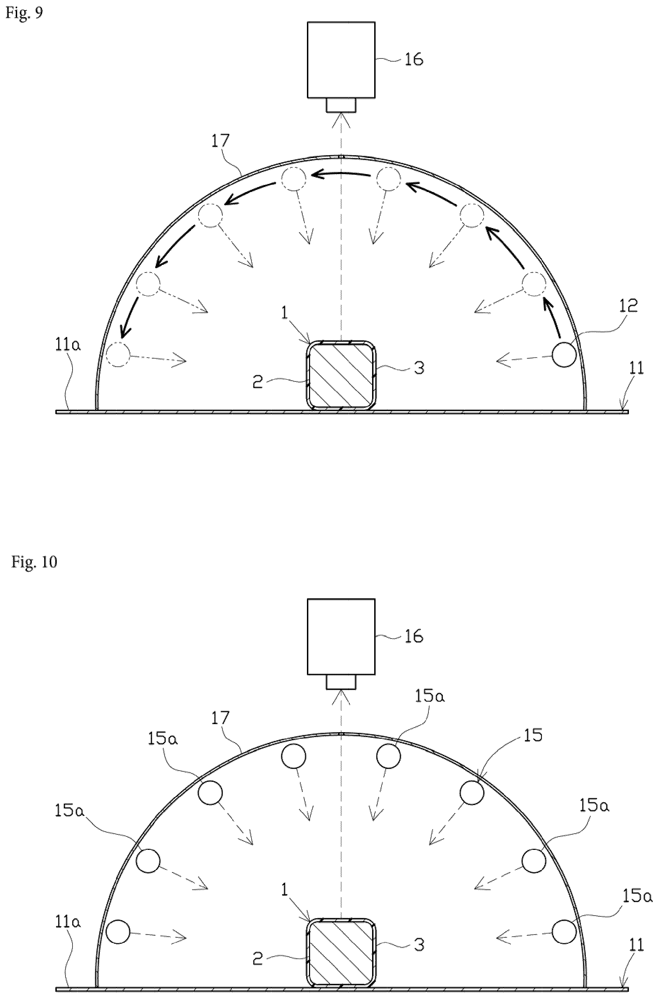

The present disclosure is not limited to the description of the above embodiment but may be implemented, for example, by configurations described below. The present disclosure may also be naturally implemented by applications and modifications other than those illustrated below.
(a) The configuration of the embodiment described above causes the packaged item 1 to be transferred by the transfer device 11 and thereby enables both the illumination device 12 and the imaging unit (the line sensor camera 13) to be moved relative to the packaged item 1. A modified configuration may, on the other hand, keep the packaged item 1 in the stopped state and may cause at least one of the illumination device 12 and the imaging unit (the line sensor camera 13) to be moved relative to the packaged item 1 by predetermined driving means. For example, as shown in Fig. 9, one modification may be configured to move the illumination device 12 along a predetermined arc-shaped route located around the packaged item 1. In this modified configuration, every time the illumination device 12 is moved by a predetermined distance, an area camera 16 serving as the "imaging unit" performs imaging of the ultraviolet light reflected from the packaged item 1. The area camera 16 takes images in a rectangular shape.

In this modified configuration described above, the regularly reflected light image data are generated by the following procedure. The regularly reflected light image data generator 24 obtains a highest luminance value among a plurality of luminance values with regard to one identical location (one certain pixel in eventually obtained regularly reflected light image data), which are respectively shown by a plurality of luminance image data obtained by the area camera 16. For example, when each of eight luminance image data obtained by eight imaging operations has one pixel corresponding to the one certain pixel, the regularly reflected light image data generator 24 obtains the highest luminance value among eight luminance values shown by these eight pixels.

The regularly reflected light image data generator 24 subsequently performs a process of setting the obtained highest luminance value to the luminance of the one identical location described above (the one certain pixel in the eventually obtained regularly reflected light image data), with respect to each of the pixels in the eventually obtained regularly reflected light image data. As a result, this configuration generates the regularly reflected light image data with regard to the packaged item 1.

Another modified configuration may include an ultraviolet light reflecting portion 17 in a tubular form placed to cover the moving route of the illumination device 12 from outside thereof. This modified configuration causes the ultraviolet light to be reflected from an inner surface of this ultraviolet light reflecting portion 17 and thereby enables the packaged item 1 to be irradiated more efficiently with the ultraviolet light. Another modification may be provided with the line sensor camera 13, in place of the area camera 16, to perform imaging of the reflected light from the packaged item 1, while moving the illumination device 12 and the packaged item 1.

(b) As shown in Fig. 10, another modification may be provided with an illumination device 15 that serves as the "irradiation unit" and that is configured by shadowless illumination using a plurality of ultraviolet light sources 15a placed around the packaged item 1 and may also be provided with the area camera 16 that serves as the "imaging unit" and that performs imaging of the ultraviolet light reflected from the packaged item 1. In the case where a plurality of imaging operations are performed for one packaged item 1 in this modified configuration, position adjustment of the packaged item 1 and the like is performed to slightly change the position of the packaged item 1 relative to the illumination device 12 with every imaging operation

The configuration of the illumination device 12 by shadowless illumination enables the regularly reflected light image data with regard to the packaged item 1 to be obtained by a relatively small number of imaging operations (i.e., by using relatively small volume of luminance image data). This configuration reduces the processing load for obtaining the regularly reflected light image data. This configuration also increases the speed of the inspection and thereby improves the productivity.

Furthermore, in the case where the object item to be packaged 2 is, for example, paper, vegetable, mushroom, meat, fish or the like and has a sufficiently low ultraviolet light reflectance on an outer surface thereof (i.e., in the case where the outer surface of the object item to be packaged 2 absorbs most of the ultraviolet light), the configuration of the illumination device 15 by shadowless illumination enables the regularly reflected light image data to be obtained by an extremely small number of imaging operation (for example, by only one imaging operation). In the case where the regularly reflected light image data is obtained by one imaging operation, the obtained regularly reflected light image data is identical with luminance image data obtained by one imaging operation of the area camera 16. In this case, there is accordingly no need to perform the process of obtaining the regularly reflected light image data from a plurality of luminance image data.

In the case where the illumination device 15 is configured by shadowless illumination, the ultraviolet light reflecting portion 17 in the tubular form may be provided such as to cover all the plurality of ultraviolet light sources 15a from outside thereof and such as to cause the ultraviolet light to be reflected by an inner surface of the ultraviolet light reflecting portion 17. This configuration enables the packaged item 1 to be irradiated more efficiently with the ultraviolet light. Another modification may be provided with the line sensor camera 13, in place of the area camera 16, to perform imaging of the reflected light from the packaged item 1, while moving the packaged item 1.

(c) According to the embodiment described above, the inspection module 26 is configured to compare the regularly reflected light image data (the original image data) with the reconfiguration image data by using the AI model 100 and thereby to determine whether the packaging material 3 is defective or non-defective. According to a modification, on the other hand, the inspection module 26 may be configured to determine whether the packaging material 3 is defective or non-defective, based on a binarized image that is obtained by processing the regularly reflected light image data by a binarization process.

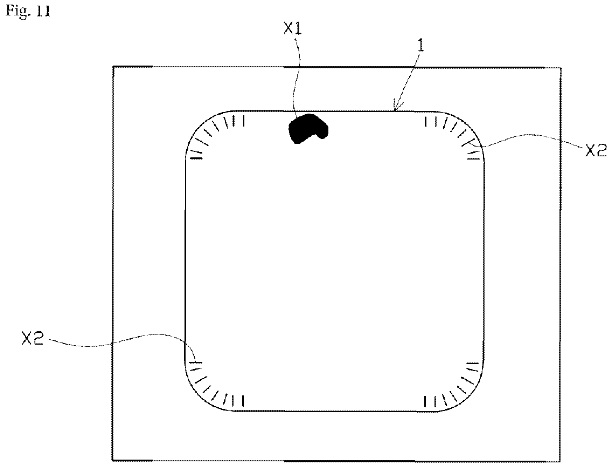

More specifically, the inspection module 26 uses a predetermined binarization reference value to process the regularly reflected light image data by a binarization process and thereby obtain binarized image data. For example, the inspection module 26 obtains binarized image data that specifies pixels having the luminance equal to or higher than the binarization reference value as "1 (bright portion)", while specifying pixels having the luminance lower than the binarization reference value as "0 (dark portion)". A damaged location X1 where a break, a tear or the like occurs and a shadow X2 caused by fine "crinkles" are shown as dark portions in the obtained binarized image data (as shown in Fig. 11). The inspection module 26 then calculates the area (the number of pixels) of a connected region of the dark portion in the binarized image data. When the calculated area is greater than a reference value set in advance, the inspection module 26 detects the presence of a break, a tear or the like in the packaging material 3 and determines that the packaging material 3 is "defective". When the calculated area is equal to or less than the reference value, on the other hand, the inspection module 26 determines that the packaging material 3 is "non-defective".

The configuration of performing the good/ poor quality judgment by utilizing the area of the connected region of the dark portion as described above more reliably prevents the shadow X2 caused by the fine "crinkles" that are present even in a non-defective packaging material 3 from being falsely detected as a defective part. As a result, this configuration furthermore improves the accuracy of the inspection.

(d) The configuration of the above embodiment utilizes the area of the connected region to perform the good/ poor quality judgment of the packaging material 3. A modified configuration may, on the other hand, utilize the length of the connected region to perform the good/ poor quality judgment of the packaging material 3. For example, in the case where the length of the connected region is greater than a predetermined reference value or in the case where there are a predetermined number of or a larger number of connected regions having the lengths exceeding a reference value, this modified configuration may determine that the packaging material 3 has a tear or a break and may thus determine that the packaging material 3 is "defective".

This modified configuration of utilizing the length of the connected region may be applied to the good/ poor quality judgment process using the binarized image data as described above in (c).

(e) The configuration of the above embodiment performs the good/ poor quality judgment of the packaging material 3, based on the state of the packaging material 3 itself. A modified configuration may, on the other hand, perform the good/ poor quality judgment of the packaging material 3, based on the state of the packaging material 3 relative to the object item to be packaged 2. For example, in the case where part of the object item to be packaged 2 is partly wrapped with the packaging material 3, this modified configuration may perform the good/ poor quality judgment of the packaging material 3, based on the relative position of the packaging material 3 to the object item to be packaged 2.

(f) The configuration of the AI model 100 (the neural network 90) serving as the "identification unit" and the learning method thereof are not limited to those of the embodiment described above. For example, a modified configuration may process a variety of data by a normalization process or the like as needed basis in the course of a learning process of the neural network 90 or in the course of a process of obtaining the reconfiguration image data. Moreover, the configuration of the neural network 90 is not limited to the structure shown in Fig. 6 but may be provided with a pooling layer subsequent to the convolution layer 93. A modified configuration may employ, for example, a different number of layers in the neural network 90, a different number of nodes in each layer, and a different connecting structure of the respective nodes.

Furthermore, according to the embodiment described above, the AI model 100 (the neural network 90) is the generation model having the configuration of the convolutional autoencoder (CAE). This configuration is, however, not restrictive. The AI model 100 (the neural network 90) may be a generation model having the configuration of a different type of autoencoder, for example, a variational autoencoder (VAE).

The above embodiment is configured to perform learning of the neural network 90 by the error backpropagation method. This configuration is, however, not restrictive. Learning of the neural network 90 may be performed by using any of various other learning algorithms.

Moreover, the neural network 90 may be configured by a dedicated AI processing circuit, such as an AI chip. In this case, only learning information such as parameters may be stored in the storage portion 20c. In this modification, the AI model 100 may be configured by setting the learning information, which is read out by the dedicated AI processing circuit, in the neural network 90.

Additionally, according to the embodiment described above, the determination system 20 includes the learning module 25 and is configured to perform learning of the neural network 90 inside of the determination system 20. This configuration is, however, not restrictive. For example, a modified configuration may exclude the learning module 25 and may cause learning of the neural network 90 to be performed outside of the determination system 20. This modified configuration may store the AI model 100 that has been learnt outside (the learnt neural network 90) into the storage portion 20c.

### Reference Signs List

1... packaged item, 2... object item to be packaged, 3... packaging material, 10... packaged item inspection device, 12,15... illumination device (irradiation unit), 13... line sensor camera (imaging unit), 16... area camera (imaging unit), 24... regularly reflected light image data generator (regularly reflected light image data generation unit), 26... inspection module (determination unit, reconfiguration image data obtaining unit, comparison unit), 91... encoder portion (encoding unit), 92... decoder portion (decoding unit), 100... AI model (identification unit)

## Claims

1. A packaged item inspection device configured to perform an inspection for a packaged item, which is obtained by shrink-wrapping or stretch-wrapping an object item to be packaged, with a packaging material made of a predetermined thermoplastic resin material, wherein
the object item to be packaged has an outer surface that is rougher than an outer surface of the packaging material,
the packaged item inspection device comprising:
an irradiation unit configured to irradiate the packaged item with ultraviolet light;
an imaging unit configured to perform imaging of the ultraviolet light reflected from the packaged item; and
a determination unit configured to determine whether the packaging material in the packaged item is defective or non-defective, based on regularly reflected light image data with regard to the packaged item obtained by the imaging performed by the imaging unit.

2. The packaged item inspection device according to claim 1,
wherein at least one of the irradiation unit and the imaging unit is configured to be movable relative to the packaged item, and
the imaging unit performs imaging of the packaged item a multiple number of times in a state that at least one of the irradiation unit and the imaging unit is moved relative to the packaged item, so as to obtain a plurality of luminance image data that include information with regard to luminance at a plurality of locations in the packaged item,
the packaged item inspection device further comprising
a regularly reflected light image data generation unit configured to perform setting of a highest luminance value, among a plurality of luminance values with regard to one identical location in the packaged item, which are respectively shown by the plurality of luminance image data, to luminance of the one identical location, with respect to each location of the packaged item, so as to generate the regularly reflected light image data with regard to the packaged item.

3. The packaged item inspection device according to claim 1,
wherein the irradiation unit is shadowless illumination having a plurality of ultraviolet light sources.

4. The packaged item inspection device according to claim 1,
wherein the determination unit is configured to process the regularly reflected light image data by a binarization process and thereby obtain binarized image data, and
when an area of a connected region of a dark portion in the binarized image data is greater than a reference value set in advance, the determination unit is configured to determine that the packaging material is defective.

5. The packaged item inspection device according to claim 1,
wherein the determination unit comprises:
an identification unit generated by learning of a neural network using only the regularly reflected light image data with regard to a non-defective packaged item, as learning data, wherein the neural network comprises an encoding unit configured to extract a feature quantity from input image data; and a decoding unit configured to reconfigure image data from the feature quantity;
a reconfiguration image data obtaining unit configured to obtain reconfiguration image data that is image data reconfigured by inputting the regularly reflected light image data obtained by the imaging performed by the imaging unit, as original image data into the identification unit; and
a comparison unit configured to determine whether the packaging material is defective or non-defective, based on a result of comparison between the original image data and the reconfiguration image data.

6. A packaged item inspection method of performing an inspection for a packaged item, which is obtained by shrink-wrapping or stretch-wrapping an object item to be packaged, with a packaging material made of a predetermined thermoplastic resin material, wherein
the object item to be packaged has an outer surface that is rougher than an outer surface of the packaging material,
the packaged item inspection method comprising:
an irradiation process of irradiating the packaged item with ultraviolet light;
an imaging process of performing imaging of the ultraviolet light reflected from the packaged item; and
a determination process of determining whether the packaging material in the packaged item is defective or non-defective, based on regularly reflected light image data with regard to the packaged item obtained by the imaging performed in the imaging process.
